# EUROPEAN PATENT APPLICATION

(11) **EP 4 834 620 A1**
(43) Date of publication of application: **04.11.2026**
(21) Application number: 24912194.8
(22) Date of filing: 29.11.2024
(51) Int. Cl.: B60K 1/04, A01B 51/02

(54) **ELECTRIC TRACTOR**

(30) Priority: 27.12.2023 JP 2023221675
(71) Applicant: KUBOTA CORPORATION, Osaka-shi, Osaka 530-0011 (JP)
(72) Inventor: SAKUMA, Tetsushi, Sakai-shi, Osaka 590-0908 (JP); INABA, Daisuke, Sakai-shi, Osaka 590-0908 (JP); SAWAI, Megumi, Sakai-shi, Osaka 590-0908 (JP); YAMAGISHI, Ryota, Sakai-shi, Osaka 590-0908 (JP)
(74) Representative: Müller-Boré & Partner Patentanwälte PartG mbB
(86) International application number: PCT/JP2024/042263
(87) International publication number: WO 2025/142304

(57) **Abstract**

An electric tractor includes a driving section 8 having a floor 38 at a lower portion thereof; a battery 10 provided frontward of the driving section 8; a front axle case 7 to which right and left front wheels 1 are attached and which is provided below the battery 10; electric motors 11 and 12 that are provided rearward of a rear end portion of the battery 10 and below the floor 38, and to which the battery 10 supplies power; and a transmission case 6 that is provided rearward of the electric motors 11 and 12, and to which the rear travel apparatus 2 is attached, the transmission case 6 including in its interior a transmission mechanism to which the motive power of the electric motors 11 and 12 is transmitted.

## Description

### Technical Field

The present invention relates to a configuration of front wheels, and transmission structures for a travel system and a PTO system in an electric tractor.

### Background Art

Some tractors, as disclosed in Patent Document 1, are provided with an engine serving as a motive power source.

In Patent Document 1, a driving section to be occupied by an operator is provided on a body provided with front wheels and rear wheels. An engine is provided frontward of the driving section, a front axle case to which the front wheels are attached is provided below the engine, and a transmission case to which the rear wheels are attached is provided below the driving section. A transmission shaft is connected between the engine and the transmission case, and a front-wheel transmission shaft is connected between the transmission case and the front axle case.

In Patent Document 1, the motive power of the engine is transmitted via a transmission shaft to a travel transmission inside the transmission case, and is transmitted from the transmission to the rear wheels. Motive power branched from the transmission is transmitted to the front wheels via the front-wheel transmission shaft.

Inside the transmission case, the motive power of the engine is branched and transmitted to a PTO shaft, and the motive power of the PTO shaft is transmitted to a work apparatus equipped on the tractor. The motive power of the engine drives a hydraulic pump, and hydraulic fluid of the hydraulic pump is supplied to a hydraulic device included on the tractor and a hydraulically operated work apparatus equipped on the tractor.

### Prior Art Document

### Patent Document

Patent Document 1: JP 2011-88523A

### Disclosure of the Invention

### Problem to be Solved by the Invention

For tractors, electric tractors have been proposed that are equipped with an electric motor that generates motive power for traveling, an electric motor that generates motive power and hydraulic pressure for operating an equipped work apparatus, and a battery that supplies power to the electric motor.

The present invention aims to provide an electric tractor configured to achieve a favorable weight balance.

### Means for Solving Problem

An electric tractor according to the present invention includes: a driving section having a floor at a lower portion thereof; a battery provided frontward of the driving section; a front axle case to which right and left front wheels are attached, and which is provided below the battery; at least one electric motor that is provided rearward of a rear end portion of the battery and below the floor, and is supplied with power of the battery; and a transmission case that is provided rearward of the at least one electric motor, and to which a rear travel apparatus is attached, the transmission case including in its interior a transmission mechanism to which the motive power of the at least one electric motor is transmitted.

According to the present invention, the battery is provided frontward of the driving section, and the front axle case is provided below the battery. The electric motor is provided below the floor of the driving section, and is provided rearward of the battery. The transmission case to which the rear travel apparatus is attached, is provided rearward of the electric motor.

According to the present invention, the battery, the electric motor, and the transmission case, which are heavy components, are arranged in the stated order from the front portion to the rear portion of the electric tractor. The electric motor, which is a heavy component, is disposed at a low position, below the floor of the driving section, and is disposed at a position near the center in the front-rear direction of the electric tractor.

This allows for a lower center of gravity of the electric tractor, resulting in a favorable weight balance and improved driving performance of the electric tractor.

In the present invention, it is preferable that the at least one electric motor generates motive power for traveling.

According to the present invention, in the electric tractor provided with the electric motor that generates motive power for traveling, a favorable weight balance can be obtained, which is advantageous in terms of improving the travel performance of the electric tractor.

In the present invention, it is preferable that the at least one electric motor generates motive power and hydraulic pressure for operating an equipped work apparatus.

According to the present invention, in the electric tractor provided with the electric motor that generates motive power and hydraulic pressure for operating the equipped work apparatus, a favorable weight balance can be obtained, which is advantageous in terms of improving the travel performance of the electric tractor.

In the present invention, it is preferable that the at least one electric motor includes a first electric motor that generates motive power for traveling, and a second electric motor that generates motive power and hydraulic pressure for operating an equipped work apparatus.

According to the present invention, the electric tractor travels with use of the motive power of the first electric motor, and the work apparatus operates with use of the motive power of the second electric motor. By separately providing the first electric motor for traveling and the second electric motor for operating the work apparatus, the work apparatus can be operated with less influence from fluctuations in the load during traveling, and the electric tractor can travel with less influence from fluctuations in the load applied to the work apparatus.

According to the present invention, in the electric tractor provided with the first electric motor that generates motive power for traveling and the second electric motor that generates motive power and hydraulic pressure for operating the equipped work apparatus, a favorable weight balance can be obtained, which is advantageous in terms of improving the travel performance of the electric tractor.

In the present invention, it is preferable that the first electric motor and the second electric motor are provided side by side along a left-right direction.

According to the present invention, the first electric motor and the second electric motor are provided side by side along the left-right direction, whereby the first electric motor and the second electric motor are provided at approximately the same position in the front-rear direction and at approximately the same height in the up-down direction. For this reason, a favorable weight balance is obtained in the electric tractor, and the travel performance of the electric tractor is improved.

In the present invention, it is preferable to include: a housing frame housing the at least one electric motor; and a front frame to which the front axle case is attached, in which the front frame is coupled to a front portion of the housing frame, and the transmission case is coupled to a rear portion of the housing frame.

According to the present invention, the electric tractor includes the housing frame that houses the electric motor and the front frame to which the front axle case (front wheel) is attached. The front frame (front wheel and front axle case) is coupled to the front portion of the housing frame, and the transmission case (rear travel apparatus) is coupled to the rear portion of the housing frame.

As a result, the front frame, the housing frame, and the transmission case are coupled to each other, whereby the front wheel and the rear travel apparatus are supported with sufficient rigidity.

In the present invention, it is preferable that the front axle case is attached to a lower portion of the front frame, and the battery is attached to an upper portion of the front frame.

According to the present invention, by attaching the front axle case to the lower portion of the front frame and the battery to the upper portion of the front frame, a configuration in which the battery is provided frontward of the driving section can be easily obtained, and a configuration in which the front axle case is provided below the battery can also be easily obtained.

In the present invention, it is preferable that the at least one electric motor includes a first electric motor and a second electric motor, the first electric motor and the second electric motor are housed side by side along the left-right direction in the housing frame, and a width in the left-right direction of the housing frame is greater than a width in the left-right direction of the front frame, and greater than a width in the left-right direction of the transmission case.

According to the present invention, when the first electric motor and the second electric motor are provided, the first electric motor and the second electric motor are housed in the housing frame side by side along the left-right direction, and therefore the length in the front-rear direction of the housing frame (first electric motor and second electric motor) is suppressed.

When the first and second electric motors are housed in the housing frame side by side along the left-right direction, the length in the front-rear direction of the housing frame is suppressed, whereas the width in the left-right direction of the housing frame increases.

According to the present invention, the width in the left-right direction of the housing frame is greater than the width in the left-right direction of the front frame, and greater than the width in the left-right direction of the transmission case.

The front frame, the housing frame, and the transmission case are coupled in this order, whereby the housing frame is provided comfortably between the front wheel and the rear travel apparatus in a side view, without interfering with the front wheel and the rear travel apparatus.

In the present invention, it is preferable that a width in the left-right direction of the front portion of the transmission case is smaller than a width in the left-right direction of the housing frame, and greater than a width in the left-right direction of the rear portion of the transmission case.

According to the present invention, when the front portion of the transmission case is coupled to the rear portion of the housing frame, the width in the left-right direction of the front portion of the transmission case is greater than the width in the left-right direction of the rear portion of the transmission case.

As a result, the width in the left-right direction of the housing frame, the width in the left-right direction of the front portion of the transmission case, and the width in the left-right direction of the rear portion of the transmission case decrease in that order. For this reason, the rigidity of the coupling portion (the front portion of the transmission case) between the housing frame and the transmission case is improved.

### Brief Description of the Drawings

FIG. 1 is a left side view of an electric tractor.
FIG. 2 is a plan view of the electric tractor.
FIG. 3 is a left side view of the vicinity of a front frame, a housing frame, and a transmission case.
FIG. 4 is a plan view of the vicinity of the front frame, the housing frame, and the transmission case.
FIG. 5 is a plan view of the housing frame.
FIG. 6 is a bottom view of the housing frame.
FIG. 7 is a front view of the housing frame.
FIG. 8 is a rear view of the housing frame.
FIG. 9 is an exploded perspective view of the housing frame.
FIG. 10 is a left side view showing a coordination mechanism spanning between a brake pedal and a brake.
FIG. 11 is a rear view of the vicinity of a support frame to which a steering wheel and the like are attached.
FIG. 12 is a plan view showing the coordination mechanism spanning between the brake pedal and the brake.
FIG. 13 is a longitudinal cross-sectional front view showing the coordination mechanism spanning between the brake pedal and the brake.
FIG. 14 is a left side view of the electric tractor equipped with a front loader apparatus.
FIG. 15 is a plan view of the vicinity of the front frame, the housing frame, and the transmission case with the front loader apparatus equipped.
FIG. 16 is a left side view of the electric tractor equipped with the front loader apparatus and a backhoe apparatus.
FIG. 17 is a plan view of the vicinity of the front frame, the housing frame, and the transmission case with the front loader apparatus and the backhoe apparatus equipped.

### Best Mode for Carrying out the Invention

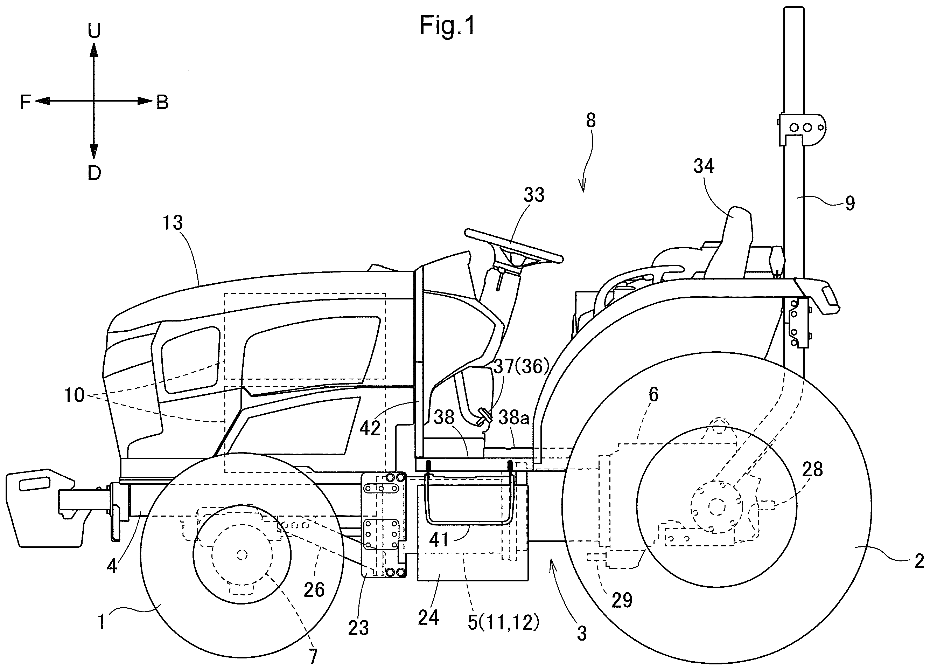

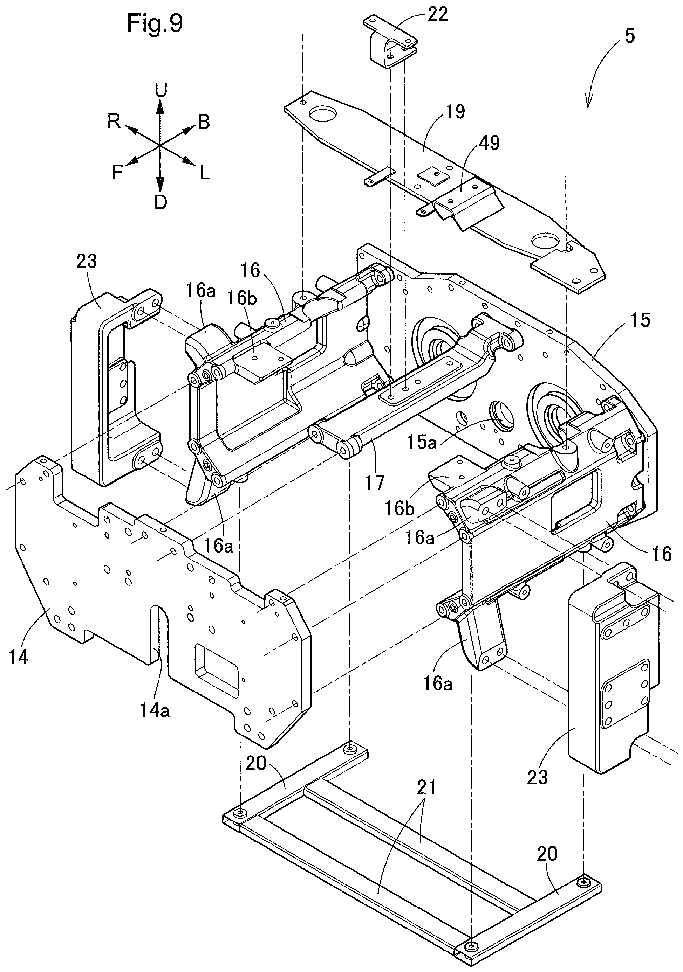

FIGS. 1 to 17 show an electric tractor, with F indicating frontward, B indicating rearward, U indicating upward, D indicating downward, R indicating rightward, and L indicating leftward in FIGS. 1 to 17.

### (Overall Configuration of Electric Tractor)

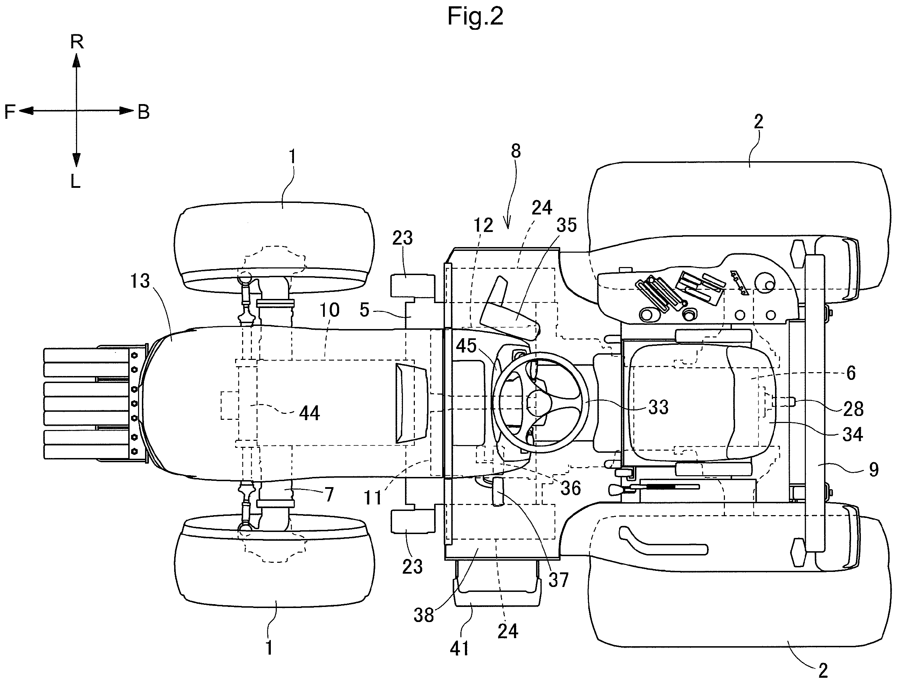

As shown in FIGS. 1 and 2, right and left front wheels 1 are provided at a front portion of a body 3, and right and left rear wheels 2 are provided at a rear portion of the body 3, with the body 3 being supported by the front wheels 1 and the rear wheels 2. In this case, the rear wheels 2 are a rear travel apparatus.

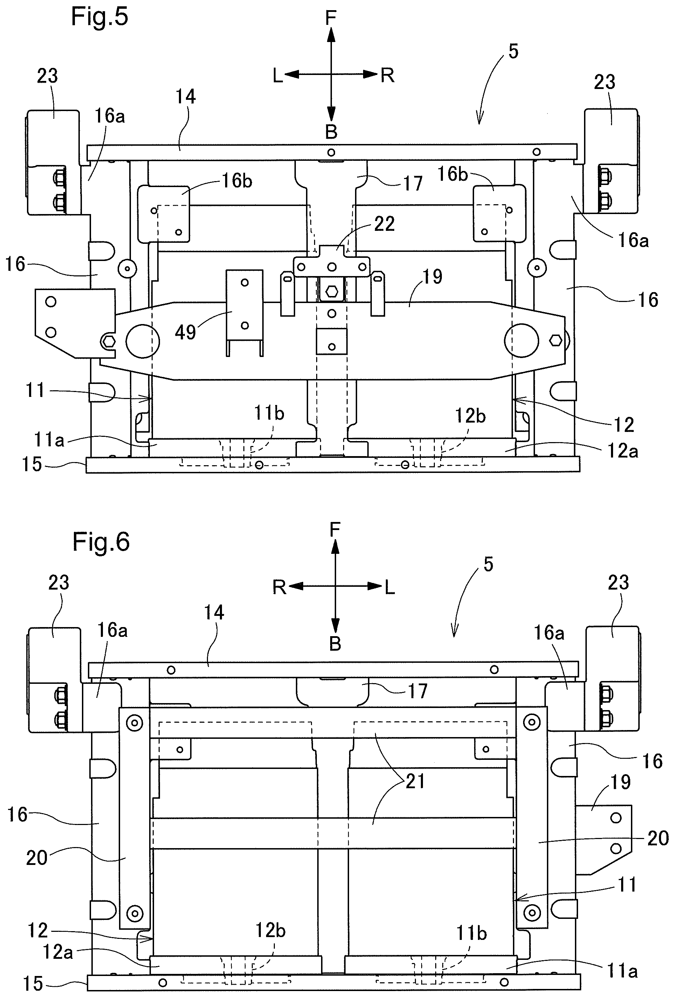

The body 3 has a front frame 4, a housing frame 5, and a transmission case 6. The front frame 4 is coupled to a front portion 14 (see FIGS. 5 to 9) of the housing frame 5, and the transmission case 6 is coupled to a rear portion 15 (see FIGS. 5 to 9) of the housing frame 5, thereby forming the body 3. The housing frame 5 houses a first electric motor 11 and a second electric motor 12, which serve as motive power sources. In this case, the front frame 4 is a first front frame.

A front axle case 7 is attached to the front frame 4, and the right and left front wheels 1 are attached to the front axle case 7. The right and left rear wheels 2 are attached to the transmission case 6.

A driving section 8 to be occupied by an operator is provided across the housing frame 5 and the transmission case 6. A ROPS frame 9 is attached to the transmission case 6 and extends upward, and is provided rearward of the driving section 8. A battery 10 that supplies power to the electric motors 11 and 12 is attached to the front frame 4, and a hood 13 covering the battery 10 is provided.

### (Configuration of Housing Frame)

As shown in FIGS. 5 to 9, the housing frame 5 has a front portion 14, a rear portion 15, a right lateral portion 16, a left lateral portion 16, frames 17, 19, 20, and 21, and the like. In this case, the right and left lateral portions 16 of the housing frame 5 are the right portion and the left portion of the housing frame 5.

The front portion 14 and the rear portion 15 are flat plates extending along the up-down direction and the left-right direction. The right and left lateral portions 16 are flat plates extending along the up-down direction and the front-rear direction, and are slightly curved. Front parts of the lateral portions 16 are coupled to a right part and a left part of a rear surface of the front portion 14, and rear parts of the lateral portions 16 are coupled to a right part and a left part of a front surface of the rear portion 15.

The frame 17 is coupled along the front-rear direction between a central part in the left-right direction of an upper part of the rear surface of the front portion 14 and a central part in the left-right direction of an upper part of the front surface of the rear portion 15. The frame 19 is coupled along the left-right direction between the upper parts of the right and left lateral portions 16. A bracket 22 is coupled between the frame 17 and the frame 19. In this case, the frame 17 is an upper frame of the housing frame 5.

The right and left frames 20 are coupled to the lower parts of the right and left lateral portions 16 along the front-rear direction. The frames 21 are coupled along the left-right direction between the right and left frames 20. A recess 14a that is open downward and faces upward is provided at a central part in the left-right direction of the lower part of the front portion 14. An opening 15a is provided at a central part in the left-right direction of the rear portion 15. In this case, the frames 21 are the lower frame of the housing frame 5.

### (Configuration for Housing Electric Motors in Housing Frame)

As shown in FIGS. 5 to 8, the electric motors 11 and 12 are provided side by side along the left-right direction inside the housing frame 5 (between the front portion 14 and the rear portion 15, between the right and left lateral portions 16, and between the frames 17 and 19 and the frames 21). The electric motors 11 and 12 are identical and have the same output.

A flange portion 11a at the rear end portion of the electric motor 11 is coupled to the left part of the front surface of the rear portion 15 of the housing frame 5. A flange portion 12a at the rear end portion of the electric motor 12 is coupled to the right part of the front surface of the rear portion 15 of the housing frame 5. Output shafts 11b and 12b of the electric motors 11 and 12 are provided facing rearward along the front-rear direction at the positions of the flange portions 11a and 12a of the electric motors 11 and 12.

Inside the housing frame 5, the electric motor 11 is provided leftward of the recess 14a in the front portion 14 and the opening 15a in the rear portion 15 of the housing frame 5. The electric motor 12 is provided rightward of the recess 14a in the front portion 14 and the opening 15a in the rear portion 15 of the housing frame 5.

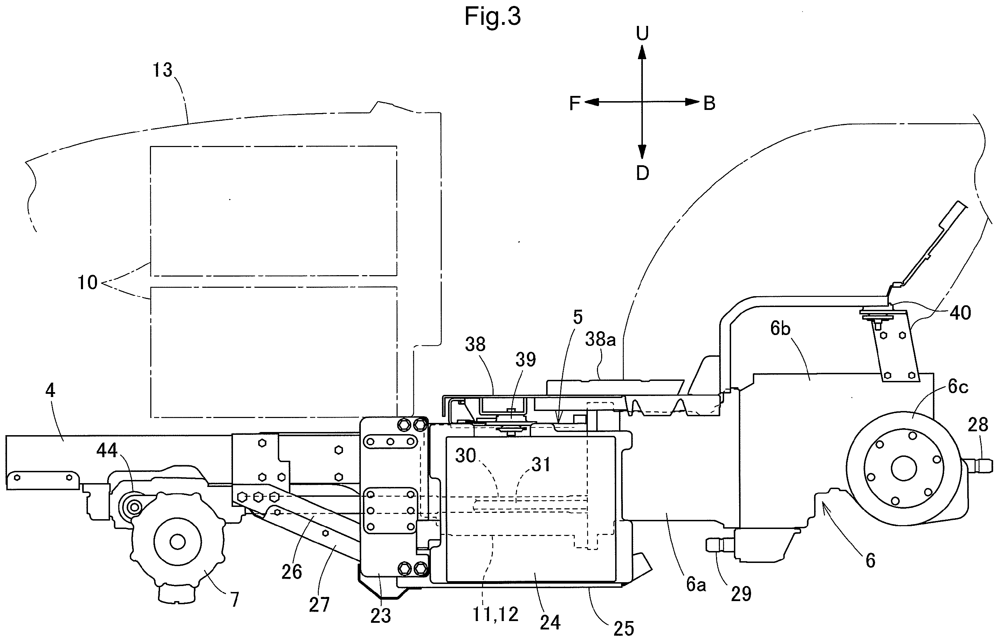

As shown in FIG. 3, a flat plate-shaped cover 25 is attached between the lower parts of the right and left lateral portions 16, which are the bottom portion of the housing frame 5, and is attached between the lower parts of the front portion 14 and the rear portion 15 of the housing frame 5. In this case, the cover 25 is an electric motor protection member.

### (Configuration of Attachment Portion for Attaching Work Apparatus, and Inverter)

As shown in FIGS. 5 to 9, on the right and left lateral portions 16 of the housing frame 5, upper attachment portions 16a are inclined upward on the upper parts of the front parts of the lateral portions 16, and lower attachment portions 16a are inclined downward on the lower parts of the front parts of the lateral portions 16.

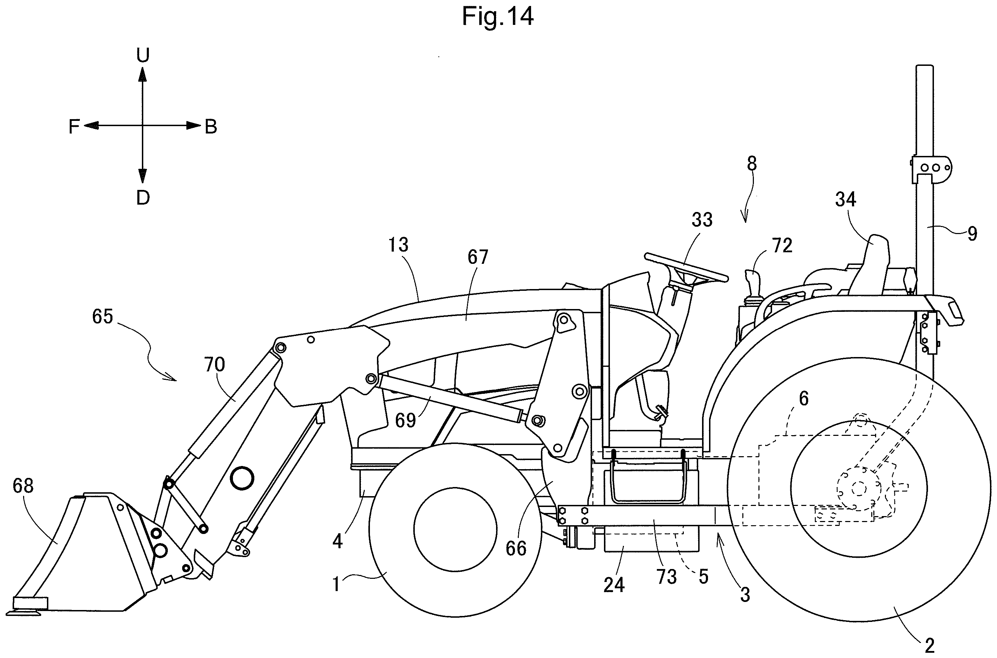

A right attachment portion 23 is coupled across the attachment portions 16a of the right lateral portion 16 of the housing frame 5. A left attachment portion 23 is coupled across the attachment portions 16a of the left lateral portion 16 of the housing frame 5. As will be described later, a work apparatus such as a front loader apparatus 65 (see FIG. 14) is attached to the right and left attachment portions 23.

As shown in FIGS. 1 to 4, right and left inverters 24 are attached to the right and left lateral portions 16 of the housing frame 5, and are provided rearward of the attachment portions 23. As will be described later, a speed change pedal 35 is provided in the driving section 8.

Power of the battery 10 is supplied to the left inverter 24, and based on an operation of the speed change pedal 35, the left inverter 24 converts the DC power of the battery 10 into AC power and supplies the result to the electric motor 11, whereby the electric motor 11 operates in both forward (forward motion of the electric tractor) and reverse (reverse motion of the electric tractor) directions.

Power of the battery 10 is supplied to the right inverter 24, and the right inverter 24 converts the DC power of the battery 10 into AC power and supplies the result to the electric motor 12, whereby the electric motor 12 operates. As described later, the electric motor 12 drives the hydraulic pump (not shown), and therefore the electric motor 12 operates in the forward direction and does not operate in the reverse direction.

### (Configuration of Front Frame and Front Axle Case)

As shown in FIGS. 1, 3, and 4, the right and left front frames 4 are provided, and the front frames 4 are coupled to the upper part of the front surface of the front portion 14 (see FIGS. 5 to 9) of the housing frame 5 and extend frontward.

Right and left front frames 26 are provided. At the lower part of the front surface of the front portion 14 (see FIGS. 5 to 9) of the housing frame 5, the rear portions of the front frames 26 are coupled to the lower parts of the front frames 4, and the front portions of the front frames 26 are coupled to intermediate portions in the front-rear direction of the front frames 4. In this case, the front frames 26 are second front frames.

The battery 10 is attached to the upper portions of the front frames 4, and the rear end portion of the battery 10 is provided frontward of the front end portions of the electric motors 11 and 12. The front axle case 7 (front wheels 1) is rollably attached to the lower portions of the front portions of the front frames 4, and is provided below the battery 10 and frontward of the electric motors 11 and 12.

A flat plate-shaped cover 27 is attached across the right and left front frames 26. In a side view, the front frames 26 and the cover 27 have a front-rising inclined orientation, with the front portions of the front frames 26 and the cover 27 being higher than the rear portions of the front frames 26 and the cover 27. In this case, the cover 27 is a front-wheel transmission shaft protection member.

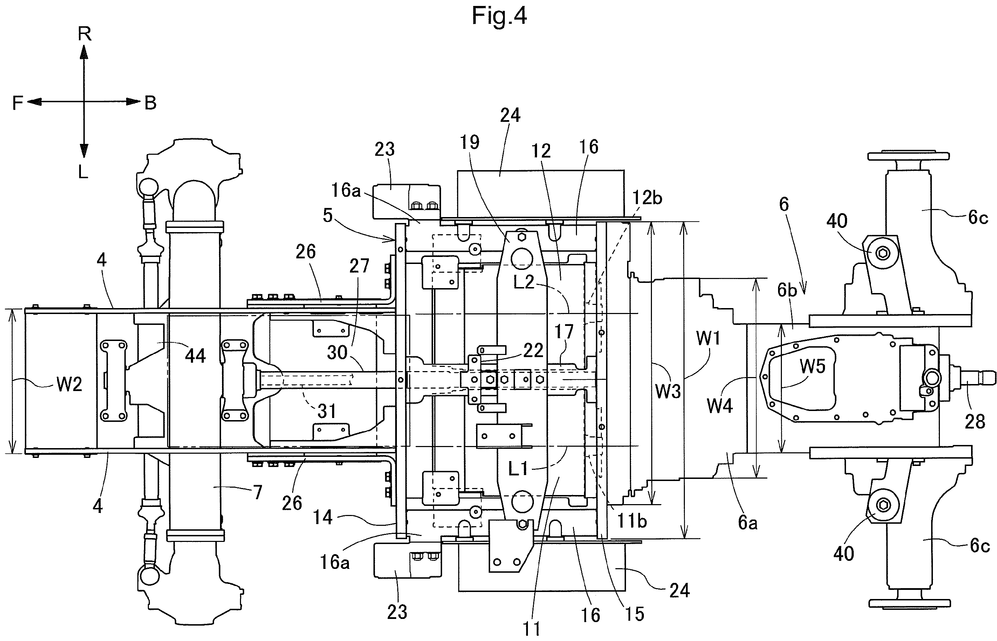

As shown in FIG. 4, the right and left front frames 4 and 26 and the cover 27 have the same width W2 in the left-right direction. A width W1 in the left-right direction of the housing frame 5 is greater than the width W2 in the left-right direction of the right and left front frames 4 and 26 and the cover 27.

In a plan view, the output shaft 11b of the electric motor 11 is located at the position of a virtual line L1 extending rearward from the left front frames 4 and 26. The output shaft 12b of the electric motor 12 is provided at the position of a virtual line L2 extending rearward from the right front frames 4 and 26. As a result, the width W2 in the left-right direction between the right and left front frames 4 and 26 and the cover 27 is approximately the same as the width (interval) in the left-right direction of the output shafts 11b and 12b of the electric motors 11 and 12.

### (Configuration of Transmission Case)

As shown in FIGS. 3 and 4, the transmission case 6 has a front portion 6a, a rear portion 6b, and right and left rear axle cases 6c, and the right and left rear wheels 2 are attached to the rear axle cases 6c of the transmission case 6. The front portion 6a of the transmission case 6 is coupled to the rear surface of the rear portion 15 of the housing frame 5, and the transmission case 6 is provided rearward of the electric motors 11 and 12.

The width W1 in the left-right direction of the housing frame 5 is greater than widths W3 and W4 in the left-right direction of the front portion 6a of the transmission case 6. The widths W3 and W4 in the left-right direction of the front portion 6a of the transmission case 6 are greater than a width W5 in the left-right direction of the rear portion 6b of the transmission case 6.

A hydraulic multi-plate travel clutch (not shown), an auxiliary transmission (not shown), and a rear-wheel differential apparatus (not shown) are provided inside the transmission case 6. The auxiliary transmission is configured as a gear-shift type and can shift between two gears, namely a high gear and a low gear. The motive power of the output shaft 11b of the electric motor 11 is transmitted to the travel clutch, is transmitted from the travel clutch to the auxiliary transmission, and is transmitted from the auxiliary transmission to the rear wheels 2 via the rear-wheel differential apparatus. In this case, the hydraulic multi-plate travel clutch, the auxiliary transmission, and the rear-wheel differential apparatus are a transmission mechanism.

Inside the transmission case 6, motive power branched from between the auxiliary transmission and the rear-wheel differential apparatus is transmitted to a later-described front-wheel transmission shaft 31, is transmitted from the front-wheel transmission shaft 31 to the front-wheel differential apparatus (not shown) inside the front axle case 7, and is transmitted from the front-wheel differential apparatus to the front wheels 1.

A PTO shaft 28 is provided facing rearward at the rear portion 6b of the transmission case 6, and a mid-PTO shaft 29 is provided facing frontward at the bottom portion of the rear portion 6b of the transmission case 6. A hydraulic multi-plate PTO clutch (not shown) and a PTO transmission system (not shown) are provided inside the transmission case 6. The motive power of the output shaft 12b of the electric motor 12 is transmitted to the PTO clutch, is transmitted from the PTO clutch to the PTO transmission system, and is transmitted from the PTO transmission system to the PTO shaft 28 and the mid-PTO shaft 29. In this case, the PTO clutch and the PTO transmission system are a transmission mechanism.

In the electric tractor, when a work apparatus such as a rotary tilling apparatus (not shown) is attached to the rear portion of the body 3, the motive power of the PTO shaft 28 is transmitted to the work apparatus. When a work apparatus such as a mower (not shown) is attached on the lower portion of the body 3 between the front wheels 1 and the rear wheels 2, the motive power of the mid-PTO shaft 29 is transmitted to the work apparatus.

### (Configuration of Front-Wheel Transmission Shaft)

As shown in FIGS. 3 and 4, a pipe member 30 is coupled along the front-rear direction, between the rear portion 15 of the housing frame 5 and the front axle case 7. The above-described front-wheel transmission shaft 31 is provided inside the pipe member 30 and is coupled between the inside of the transmission case 6 and the front-wheel differential apparatus of the front axle case 7.

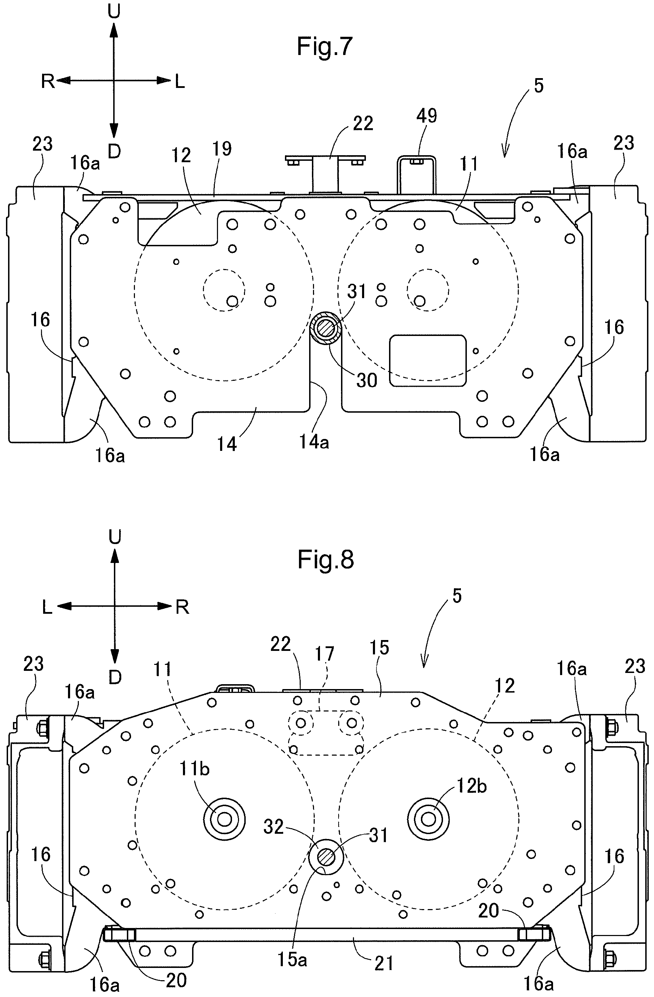

As shown in FIGS. 7, 8, and 9, in the housing frame 5, the pipe member 30 and the front-wheel transmission shaft 31 are provided in the recess 14a of the front portion 14 of the housing frame 5, and the front-wheel transmission shaft 31 is provided in the opening 15a of the rear portion 15 of the housing frame 5.

A bearing portion 32 is provided in the opening 15a of the rear portion 15 of the housing frame 5. The front-wheel transmission shaft 31 is supported by the bearing portion 32, and thus is supported on the rear portion 15 of the housing frame 5 via the bearing portion 32. The rear end portion of the pipe member 30 is attached to the bearing portion 32.

As shown in FIGS. 3, 4, 7, and 8, the pipe member 30 and the front-wheel transmission shaft 31 are provided between the right and left front frames 4 and 26 in a plan view, and above the cover 27. The pipe member 30 and the front-wheel transmission shaft 31 are provided between the output shaft 11b of the electric motor 11 and the output shaft 12b of the electric motor 12 in a plan view, and are provided at the center in the left-right direction of the housing frame 5, and directly below the frame 17 of the housing frame 5.

The pipe member 30 and the front-wheel transmission shaft 31 are provided at a height overlapping with the electric motors 11 and 12 in a side view.

Specifically, the pipe member 30 and the front-wheel transmission shaft 31 are provided between the output shafts 11b and 12b of the electric motors 11 and 12 and the lower end portions of the electric motors 11 and 12 in a side view, and are provided above the frame 21 of the housing frame 5.

### (Configuration of Driving Section)

As shown in FIGS. 1 and 2, the driving section 8 is provided with a steering wheel 33 for steering the front wheels 1, a driver's seat 34, the above-described speed change pedal 35, right and left brake pedals 36 and 37, a floor 38, and the like.

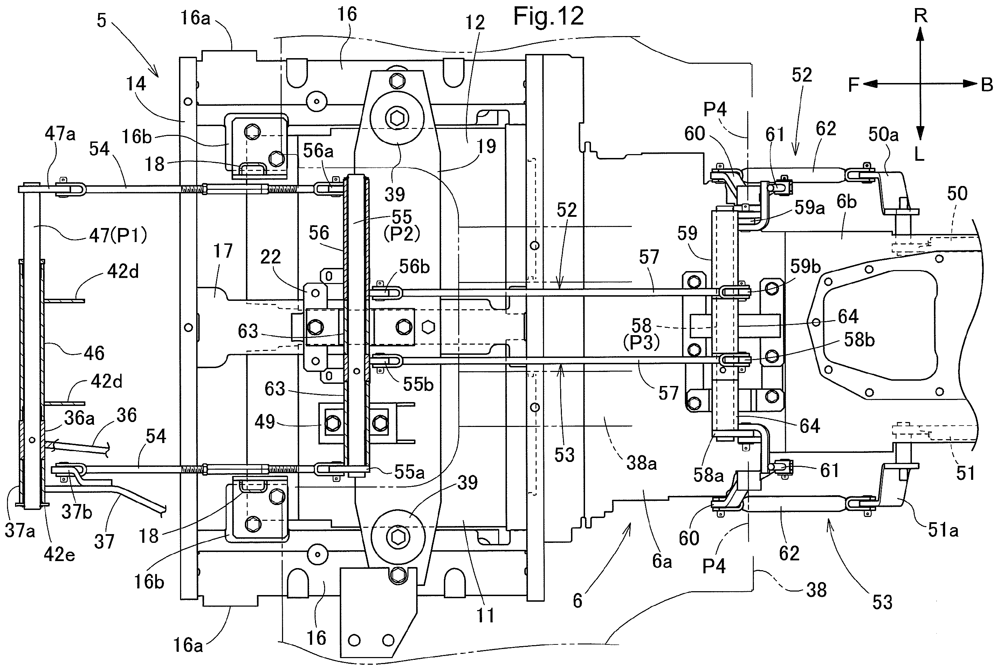

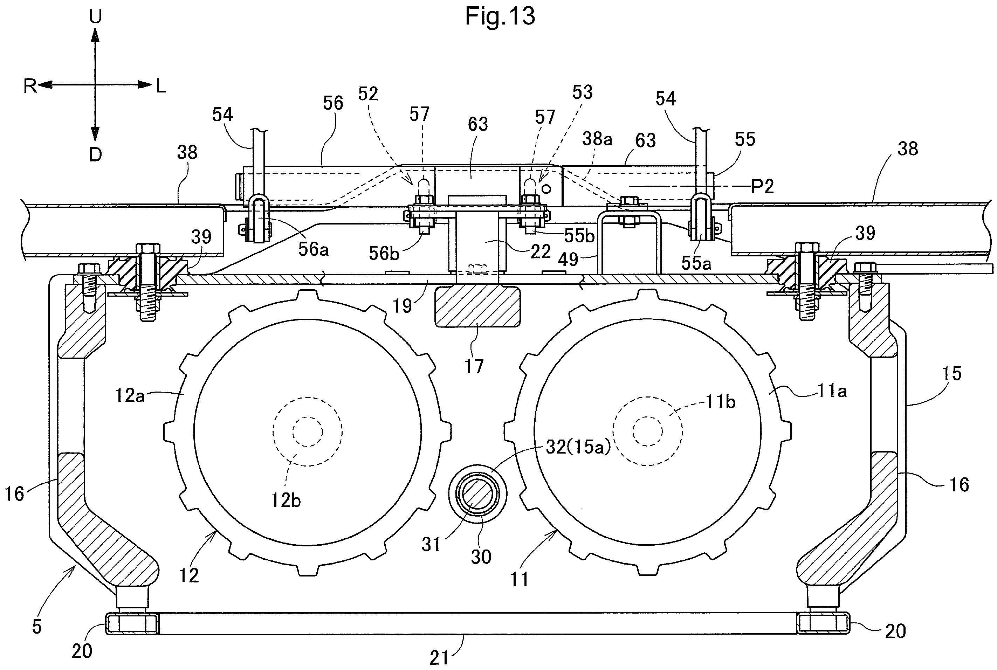

As shown in FIGS. 12 and 13, elastically deformable right and left support portions 39 made of rubber are provided on the right part and the left part of the frame 19 of the housing frame 5, and the support portions 39 are provided between the floor 38 provided below the driving section 8 and the housing frame 5 (frame 19).

As shown in FIGS. 3 and 4, elastically deformable right and left support portions 40 made of rubber are provided on the right part and the left part of the rear portion 6b of the transmission case 6, and the support portions 40 are provided between the rear portion of the driving section 8 and the rear portion 6b of the transmission case 6.

As shown in FIGS. 3, 4, 12, and 13, the floor 38 is attached to the support portions 39 and is attached to and supported by the housing frame 5 via the support portions 39, and the speed change pedal 35 is provided on the right portion of the floor 38. The rear portion of the driving section 8 is attached to the support portions 40, and is attached to and supported by the rear portion 6b of the transmission case 6 via the support portions 40.

As shown in FIGS. 1 and 2, a step 41 serving as a foothold is attached to the left portion of the floor 38, and an operator mainly boards and alights from the driving section 8 from the left side of the body 3.

The housing frame 5 and the electric motors 11 and 12 are provided below the floor 38. The battery 10 is provided frontward of the driving section 8 in such a manner that the rear end portion of the battery 10 is provided frontward of the front end portions of the electric motors 11 and 12.

### (Configuration of Support Frame of Driving Section)

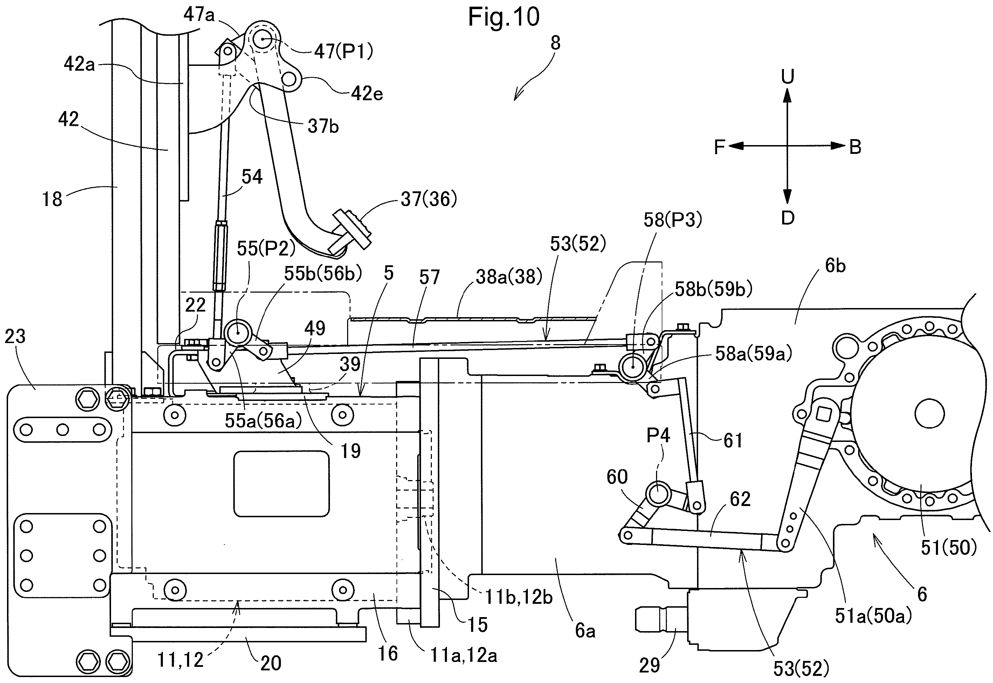

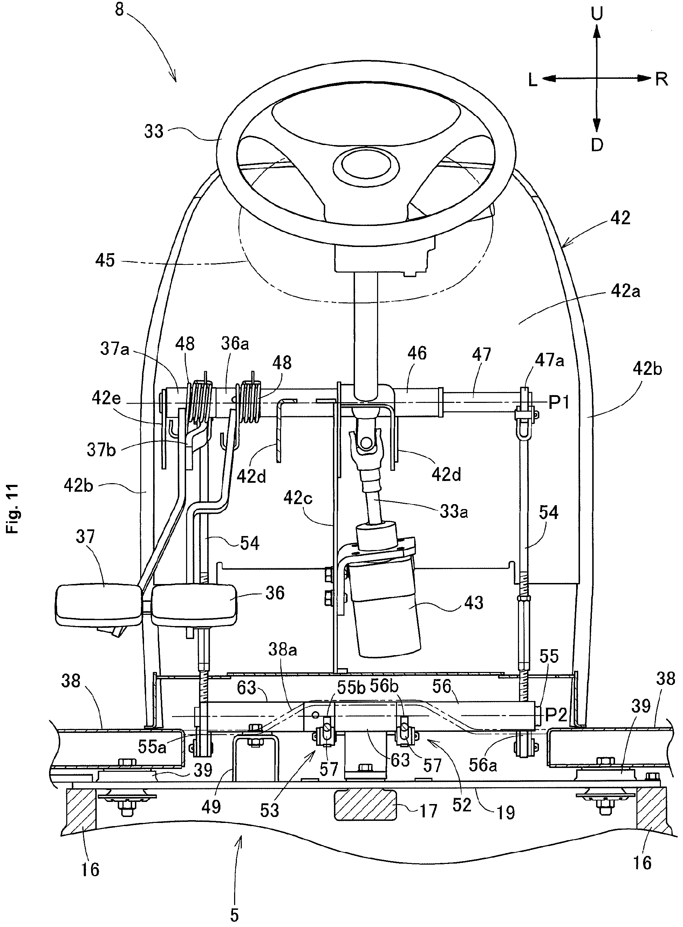

As shown in FIGS. 10 and 11, a support frame 42 is attached to the floor 38 and extends upward from the floor 38. The support frame 42 has a partition wall portion 42a, pillar portions 42b, and support plates 42c and 42d.

In the support frame 42, the partition wall portion 42a has a flat plate shape, is attached to the front portion of the floor 38, and separates the inside of the hood 13 and the battery 10 from the driving section 8. The pillar portions 42b are formed in arch shapes in a front view and are coupled to the outer peripheral portion of the partition wall portion 42a.

In the support frame 42, the support plate 42c has a vertically elongated flat plate shape and is coupled to the central part in the left-right direction of the lower part of the partition wall portion 42a. The support plate 42d has a flat plate shape, is coupled to a central part in the left-right direction of the partition wall portion 42a, and extends rearward.

### (Configuration of Steering Wheel, Power Steering Apparatus, and Display Unit in Support Frame)

As shown in FIG. 11, the base portion of the steering wheel 33 is attached to the upper portion of the support plate 42c and the support plate 42d of the support frame 42, whereby the steering wheel 33 is attached to the support frame 42.

A fully hydraulic power steering apparatus 43 is attached to the lower portion of the support plate 42c of the support frame 42, and the power steering apparatus 43 is attached to the part of the support frame 42 below the steering wheel 33. A steering shaft 33a extending downward from the base portion of the steering wheel 33 is connected to the power steering apparatus 43.

As shown in FIGS. 2, 3, and 4, a steering cylinder 44 is attached to the front axle case 7, and hydraulic fluid from the power steering apparatus 43 is supplied to the steering cylinder 44.

When the steering wheel 33 is operated, the steering shaft 33a of the steering wheel 33 operates the power steering apparatus 43, and hydraulic fluid is supplied from the power steering apparatus 43 to the steering cylinder 44, whereby the steering cylinder 44 operates and the front wheels 1 are steered.

As shown in FIGS. 2 and 11, the display unit 45 is attached to the part of the support frame 42 above the support plates 42c and 42d. The display unit 45 is constituted by a liquid crystal panel, and various types of information are displayed on the display unit 45.

### (Configuration of Pillar Frame and Hood)

As shown in FIGS. 10 and 12, a pillar frame 18 formed in an arch shape in a front view is provided, and the pillar frame 18 is provided adjacent to the support frame 42 on the front side.

As shown in FIGS. 5, 9, and 12, right and left brackets 16b are provided on the front parts of the upper parts of the right and left lateral portions 16 of the housing frame 5. The right and left lower parts of the pillar frame 18 are coupled to the right and left brackets 16b of the housing frame 5 (lateral portions 16), and the pillar frame 18 extends upward from the housing frame 5.

In this case, the support portions 39 and 40 are not provided between the lower part of the pillar frame 18 and the brackets 16b of the housing frame 5 (lateral portions 16), and the lower part of the pillar frame 18 is directly coupled to the brackets 16b of the housing frame 5 (lateral portions 16).

As shown in FIGS. 1 and 2, the hood 13 is attached on the upper portion of the pillar frame 18 in such a manner as to be able to swing about an axis extending along the left-right direction. The hood 13 can be opened and closed between a closed position (see FIG. 1) and an open position above the closed position.

### (Configuration of Brake Pedal in Support Frame)

As shown in FIGS. 10 to 13, a pipe member 46 is coupled along the left-right direction to the upper portion of the support plate 42d of the support frame 42. A pivot shaft 47 is attached to the pipe member 46 in such a manner as to be rotatable about an axis P1 extending along the left-right direction, and the left portion of the pivot shaft 47 is rotatably supported by a bracket 42e coupled to the partition wall portion 42a of the support frame 42.

A boss portion 36a is coupled to the upper portion of the right brake pedal 36, the boss portion 36a of the right brake pedal 36 is coupled to the left portion of the pivot shaft 47, and the right brake pedal 36 extends downward from the pivot shaft 47. The right brake pedal 36 and the pivot shaft 47 swing integrally about the axis P1.

A boss portion 37a is coupled to the upper portion of the left brake pedal 37, the boss portion 37a of the left brake pedal 37 is rotatably attached to the left portion of the pivot shaft 47, and the left brake pedal 37 extends downward from the pivot shaft 47. The left brake pedal 37 swings independently about the axis P1, regardless of the right brake pedal 36 and the pivot shaft 47.

The operator seated in the driver's seat 34 depresses the right and left brake pedals 36 and 37 frontward from the orientation shown in FIG. 10 with his or her left foot. A return spring 48 is attached to the boss portions 36a and 37a of the right and left brake pedals 36 and 37. In response to the operator removing his or her left foot from the right and left brake pedals 36 and 37, the right and left brake pedals 36 and 37 return to the orientation shown in FIG. 10 by the return spring 48.

### (Configuration of Coordination Mechanism Connected Between Brake Pedals and Brakes) - 1

As shown in FIGS. 10, 11, and 12, a right brake 50 capable of braking the right rear wheel 2 and a right brake 51 capable of braking the left rear wheel 2 are provided at the rear portion 6b of the transmission case 6. Aright coordination mechanism 52 is connected between the right brake pedal 36 and the right brake 50 as described below. A left coordination mechanism 53 is connected between the left brake pedal 37 and the left brake 51 as described below.

The right coordination mechanism 52 includes a right coordination rod 54, a pipe member 56, a right coordination rod 57, a pipe member 59, a right crank member 60, a right coordination rod 61, and a right coordination rod 62. In this case, the pipe member 59 is a left-right part, the coordination rod 61 is an up-down part, and the coordination rod 62 is a front-rear part.

The left coordination mechanism 53 includes a left coordination rod 54, a coordination shaft 55, a left coordination rod 57, a coordination shaft 58, a left crank member 60, a left coordination rod 61, and a left coordination rod 62. In this case, the coordination shaft 58 is a left-right part, the coordination rod 61 is an up-down part, and the coordination rod 62 is a front-rear part.

A bracket 49 is coupled to the frame 19 of the housing frame 5, and two pipe members 63 are respectively coupled to the brackets 22 and 49 of the housing frame 5, with an interval therebetween in the left-right direction. The coordination shaft 55 is attached to the pipe members 63 in such a manner as to be rotatable about an axis P2 extending in the left-right direction. An arm 55a is coupled to the left end portion of the coordination shaft 55, and an arm 55b is coupled to a central portion in the left-right direction of the coordination shaft 55 (the part between the two pipe members 63).

The pipe member 56 is attached to the right portion of the coordination shaft 55 in such a manner as to be rotatable about the axis P2 independently of the coordination shaft 55. The arm 56a is coupled to the right end portion of the pipe member 56, and the arm 56b is coupled to the left end portion of the pipe member 56.

The right coordination rod 54 is coupled between the arm 47a of the pivot shaft 47 and the arm 56a of the pipe member 56. The left coordination rod 54 is coupled between the arm 37b of the left brake pedal 37 and the arm 55a of the coordination shaft 55.

### (Configuration of Coordination Mechanism Connected Between Brake Pedals and Brakes) -2

As shown in FIGS. 10 to 13, two pipe members 64 are coupled to the upper side portions of the rear portion 6b of the transmission case 6 with an interval therebetween in the left-right direction. The coordination shaft 58 is attached to the pipe members 64 in such a manner as to be rotatable about an axis P3 extending in the left-right direction. An arm 58a is coupled to the left end portion of the coordination shaft 58, and an arm 58b is coupled to a central portion in the left-right direction of the coordination shaft 58 (the part between the two pipe members 64).

The pipe member 59 is attached to the right portion of the coordination shaft 58 in such a manner as to be rotatable about the axis P3 independently of the coordination shaft 58. An arm 59a is coupled to the right end portion of the pipe member 59, and an arm 59b is coupled to the left end portion of the pipe member 59.

The right coordination rod 57 is connected between the arm 56b of the pipe member 56 and the arm 59b of the pipe member 59. The left coordination rod 57 is connected between the arm 55b of the coordination shaft 55 and the arm 58b of the coordination shaft 58.

In the floor 38 of the driving section 8, a raised portion 38a that is curved upward relative to other parts of the floor 38 is formed at a central part in the left-right direction of the floor 38, and the raised portion 38a is provided along the front-rear direction, extending from the front end portion to the rear end portion of the floor 38.

The right and left coordination rods 57 are provided side by side in the left-right direction and in the front-rear direction between the raised portion 38a of the floor 38 and the housing frame 5. The right and left coordination rods 57 extend to a position above the rear portion 5b of the transmission case 6 (the coordination shaft 58 and the pipe member 59).

### (Configuration of Coordination Mechanism Connected Between Brake Pedals and Brakes) - 3

As shown in FIGS. 10 and 12, the right portion of the coordination shaft 58 and the pipe member 59 extend laterally outward on the right from the central portion in the left-right direction of the rear portion 6b of the transmission case 6, and extend above the right lateral side portion of the rear portion 6b of the transmission case 6. The left portion of the coordination shaft 58 extends laterally outward on the left from the central portion in the left-right direction of the rear portion 6b of the transmission case 6, and extends above the left lateral side portion of the rear portion 6b of the transmission case 6.

The right and left crank members 60 are attached to the right and left lateral side portions of the rear portion 6b of the transmission case 6 in such a manner as to be swingable about an axis P4 extending along the left-right direction. The right coordination rod 61 is connected between the arm 59a of the pipe member 59 and the right crank member 60. The left coordination rod 61 is connected between the arm 58a of the coordination shaft 58 and the left crank member 60.

The right coordination rod 61 is provided rearward of the right part of the front portion 6a of the transmission case 6, and laterally outward of the right lateral side portion of the rear portion 6b of the transmission case 6, and is provided along the up-down direction. The left coordination rod 61 is provided rearward of the left part of the front portion 6a of the transmission case 6, and laterally outward of the left lateral side portion of the rear portion 6b of the transmission case 6, and is provided along the up-down direction.

The right coordination rod 62 is connected along the front-rear direction between the right crank member 60 and an operation portion 50a of the right brake 50. The left coordination rod 62 is coupled along the front-rear direction between the left crank member 60 and an operation portion 51a of the left brake 51.

### (Operation State of Brakes via Brake Pedals)

As shown in FIGS. 10 to 13, in response to the right brake pedal 36 being depressed frontward, the pivot shaft 47 is operated in a clockwise direction in FIG. 10, the right coordination rod 54 is operated upward, and the pipe member 56 is operated in the clockwise direction in FIG. 10.

In response to the pipe member 56 being operated in the clockwise direction in FIG. 10, the right coordination rod 57 is operated frontward, the pipe member 59 is operated in a counterclockwise direction in FIG. 10, the right coordination rod 61 is operated upward, the right crank member 60 is operated in the counterclockwise direction in FIG. 10, the right coordination rod 62 is operated rearward, the operation portion 50a of the right brake 50 is operated rearward, and a braking operation is performed on the right brake 50.

In response to the left brake pedal 37 being depressed frontward, the left coordination rod 54 is operated upward, and the coordination shaft 55 is operated in the clockwise direction in FIG. 10.

In response to the coordination shaft 55 being operated in the clockwise direction in FIG. 10, the left coordination rod 57 is operated frontward, the coordination shaft 58 is operated in the counterclockwise direction in FIG. 10, the left coordination rod 61 is operated upward, the left crank member 60 is operated in the counterclockwise direction in FIG. 10, the left coordination rod 62 is operated rearward, the operation portion 51a of the left brake 51 is operated rearward, and a braking operation is performed on the left brake 51.

### (Configuration of Front Loader Apparatus)

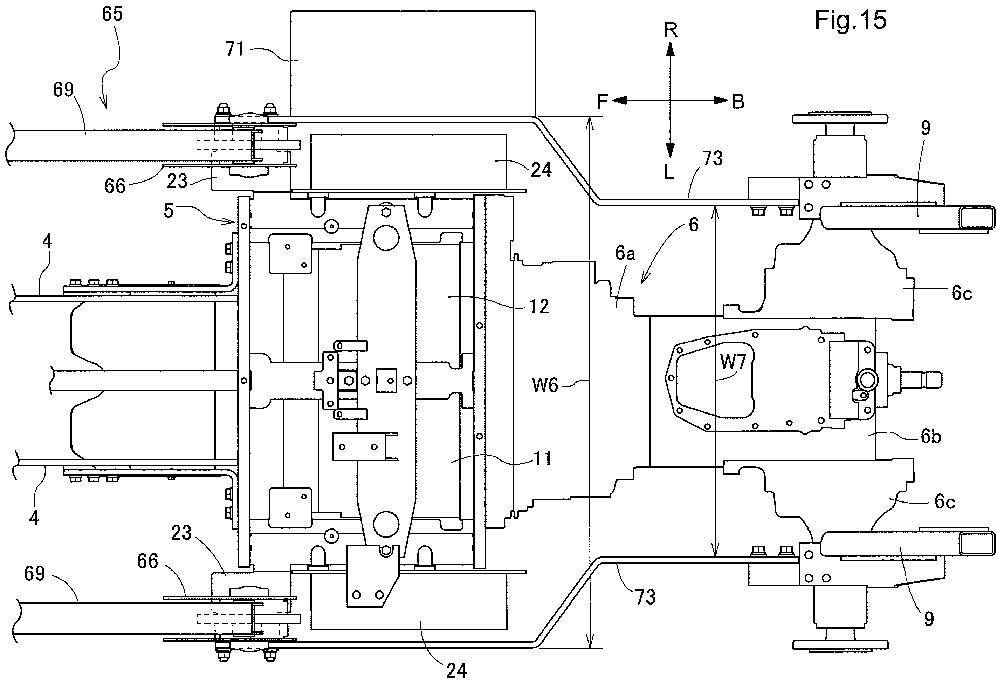

As shown in FIGS. 14 and 15, the electric tractor is equipped with the front loader apparatus 65, which is a work apparatus, in some cases.

The front loader apparatus 65 includes right and left base portions 66, right and left booms 67, a bucket 68, right and left boom cylinders 69, and right and left bucket cylinders 70.

The booms 67 are attached to upper end portions of the base portions 66 in such a manner as to be swingable up and down, and the boom cylinders 69 for swinging the booms 67 up and down are connected between the base portions 66 and the booms 67. The bucket 68 is attached to the front end portions of the right and left booms 67 in such a manner as to be swingable up and down, and the bucket cylinders 70 for swinging the bucket 68 up and down are connected between the booms 67 and the bucket 68.

### (Configuration of Backhoe Apparatus)

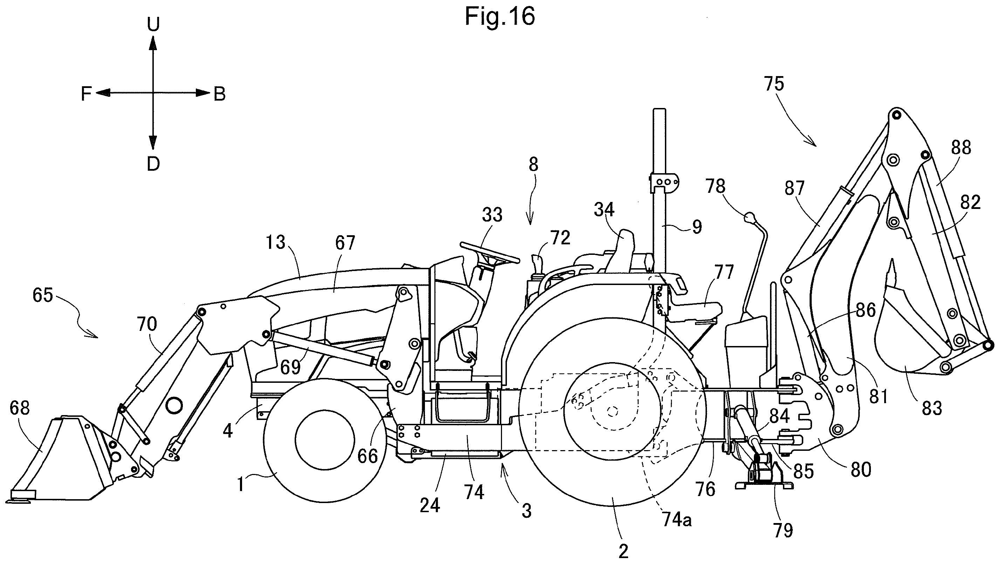

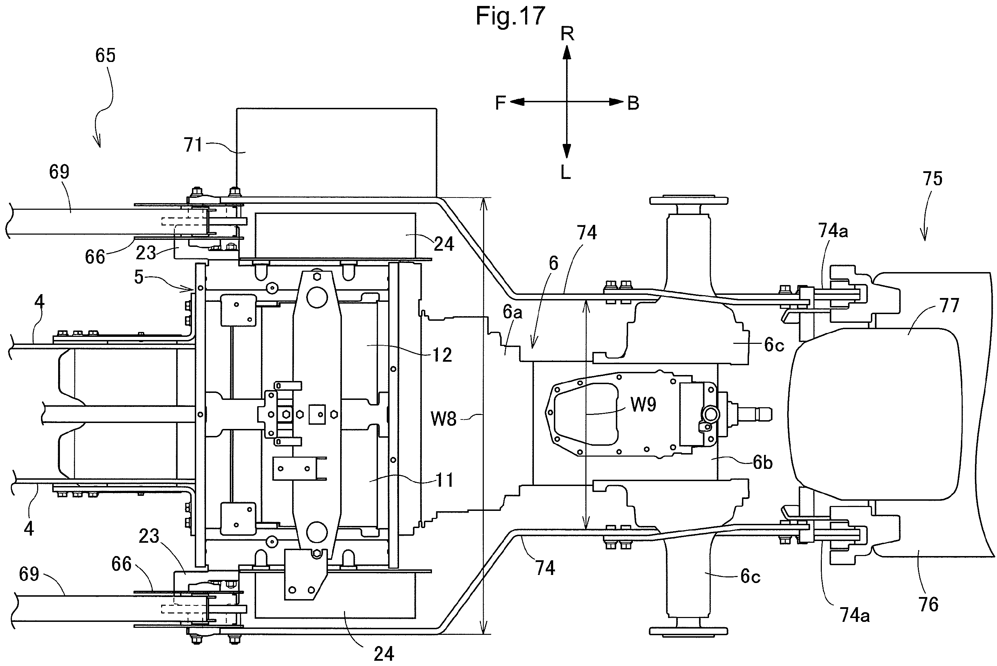

As shown in FIGS. 16 and 17, the electric tractor may be equipped with the front loader apparatus 65 and a backhoe apparatus 75, which are work apparatuses. The front loader apparatus 65 is the same as in FIGS. 14 and 15.

The backhoe apparatus 75 includes a base portion 76, a work seat 77, an operation lever 78, right and left outriggers 79, a swing bracket 80, a boom 81, an arm 82, a bucket 83, right and left outrigger cylinders 84, a swing cylinder 85, a boom cylinder 86, an arm cylinder 87, and a bucket cylinder 88.

The work seat 77 and the operation lever 78 are provided on the frame-shaped base portion 76. The right and left outriggers 79 are attached to the base portion 76 in such a manner as to be swingable up and down, and the outrigger cylinders 84 that swing the outriggers 79 up and down are connected between the base portion 76 and the outriggers 79.

The swing bracket 80 is attached to the base portion 76 in such a manner as to be swingable in the left-right direction, and the swing cylinder 85 that swings the swing bracket 80 in the left-right direction is connected between the base portion 76 and the swing bracket 80.

The boom 81 is attached to the swing bracket 80 in such a manner as to be swingable up and down, and the boom cylinder 86 that swings the boom 81 up and down is connected between the swing bracket 80 and the boom 81.

The arm 82 is attached to the boom 81 in such a manner as to be swingable back and forth, and the arm cylinder 87 for swinging the arm 82 back and forth is connected between the boom 81 and the arm 82.

The bucket 83 is attached to the arm 82 in such a manner as to be swingable back and forth, and the bucket cylinder 88 that swings the bucket 83 back and forth is connected between the arm 82 and the bucket 83.

### (Configuration When Front Loader Apparatus and Backhoe Apparatus Are Equipped on Electric Tractor)

As shown in FIGS. 14 to 17, when the front loader apparatus 65 is equipped, a lower portion of the right base portion 66 of the front loader apparatus 65 is coupled to a lateral outer surface of the right attachment portion 23 of the housing frame 5, and a lower portion of the left base portion 66 is coupled to a lateral outer surface of the left attachment portion 23 of the housing frame 5.

When only the front loader apparatus 65 is equipped, right and left front-rear frames 73 are used, as shown in FIGS. 14 and 15. When the front loader apparatus 65 and the backhoe apparatus 75 are equipped, right and left front-rear frames 74 are used, as shown in FIGS. 16 and 17.

As described above, with the base portions 66 of the front loader apparatus 65 coupled to the attachment portions 23 of the housing frame 5, as shown in FIGS. 14 to 17, front end portions of right front-rear frames 73 and 74 are coupled to the lateral outer surface of the right base portion 66 of the front loader apparatus 65, and rear end portions of the right front-rear frames 73 and 74 are coupled to the right rear axle case 6c of the transmission case 6.

The front end portions of the left front-rear frames 73 and 74 are coupled to the lateral outer surface of the left base portion 66 of the front loader apparatus 65, and the rear end portions of the left front-rear frames 73 and 74 are coupled to the left rear axle case 6c of the transmission case 6. In this case, the right and left rear axle cases 6c of the transmission case 6 are parts of the transmission case 6 to which the right and left travel apparatuses (rear wheels 2) are attached.

The base portions 66 of the front loader apparatus 65 are interposed between the attachment portions 23 and the front end portions of the front-rear frames 73 and 74, and the attachment portions 23, the front end portions of the front-rear frames 73 and 74, and the base portions 66 of the front loader apparatus 65 are fastened together and coupled.

As shown in FIGS. 16 and 17, in the right and left front-rear frames 74, right and left rear attachment portions 74a are provided on the rear portion of the front-rear frame 74. When the backhoe apparatus 75 is equipped, the base portion 76 of the backhoe apparatus 75 is attached to the rear attachment portion 74a of the front-rear frames 74.

### (Configuration of Operation of Front Loader Apparatus and Backhoe Apparatus)

As shown in FIGS. 14 to 17, a control valve unit 71 provided with a plurality of electromagnetically operated control valves is attached to the front portions of the right front-rear frames 73 and 74. An operation lever 72 for operating the control valve unit 71 is provided at the right portion of the driving section 8. In this case, the control valve unit 71 is a control valve.

The electric motor 12 drives a hydraulic pump (not shown), and hydraulic fluid of the hydraulic pump is supplied to the control valve unit 71, and is supplied to and discharged from the boom cylinder 69 and the bucket cylinder 70 of the front loader apparatus 65 from the control valve unit 71. The hydraulic fluid of the hydraulic pump is supplied also to a hydraulic device (not shown), such as the power steering apparatus 43 (see FIG. 11) equipped on the electric tractor, and the hydraulic device such as the power steering apparatus 43 operates with use of the supplied hydraulic fluid.

The operator in the driver's seat 34 can operate the control valve of the control valve unit 71 by operating the operation lever 72, thereby operating the boom 67 and the bucket 68 of the front loader apparatus 65.

When operating the backhoe apparatus 75, the operator switches to a state in which the hydraulic fluid of the above-described hydraulic pump is supplied to the backhoe apparatus 75.

The operator sits in the work seat 77 of the backhoe apparatus 75 and lowers the right and left outriggers 79 to the ground. The operator in the work seat 77 can operate the swing bracket 80, the boom 81, the arm 82, and the bucket 83 of the backhoe apparatus 75 by operating the operation lever 78 to operate the control valve (not shown) of the backhoe apparatus 75.

### (Configuration of Front-Rear Frames)

As shown in FIGS. 14 to 17, the front-rear frames 73 and 74 are formed in crank shapes in a plan view. Widths (intervals) W6 and W8 in the left-right direction of the front portions of the right and left front-rear frames 73 and 74 are greater than widths (intervals) W7 and W9 in the left-right direction of the rear portions of the right and left front-rear frames 73 and 74. The widths (intervals) W7 and W9 in the left-right direction of the rear portions of the right and left front-rear frames 73 and 74 are approximately the same as the width W1 in the left-right direction of the housing frame 5 (see FIG. 4).

The right front-rear frames 73 and 74 are provided along the front-rear direction laterally outward on the right of the right inverter 24 and laterally outward on the right of the transmission case 6, and the control valve unit 71 is attached to the front portions of the right front-rear frames 73 and 74. The left front-rear frames 73 and 74 are provided along the front-rear direction laterally outward on the left of the left inverter 24 and laterally outward on the left of the transmission case 6. The right and left front-rear frames 73 and 74 are provided at a height that overlaps with the inverter 24, the housing frame 5, and the transmission case 6 in a side view.

The widths (intervals) W7 and W9 in the left-right direction of the rear portions of the right and left front-rear frames 73 and 74 are smaller than the widths (intervals) W6 and W8 in the left-right direction of the front portions of the right and left front-rear frames 73 and 74. For this reason, the rear portions of the right and left front-rear frames 73 and 74 do not interfere with the rear wheels 2.

### (First Alternative Embodiment of Invention)

The housing frame 5 may be eliminated.

According to this configuration, it is preferable that the electric motors 11 and 12 are attached to the lower portion of the floor 38. It is preferable that the front frame 4 extends rearward, passing below the floor 38, and is coupled to the transmission case 6, and the electric motors 11 and 12 attached on the part of the front frame 4 that is below the floor 38.

The base portion 66 of the front loader apparatus 65 is preferably configured to be coupled to the front frame 4.

### (Second Alternative Embodiment of the Invention)

Since the electric motor 12 may require a larger output than the electric motor 11 that generates motive power for traveling, the electric motor 12 may be configured to have a larger output than the electric motor 11.

### (Third Alternative Embodiment of Invention)

The PTO shaft 28 and the mid-PTO shaft 29 may be eliminated.

According to this configuration, only a work apparatus that operates with use of hydraulic fluid can be equipped on the electric tractor.

If the work apparatus is equipped, the hydraulic fluid of the hydraulic pump driven by the electric motor 12 is supplied to the work apparatus and hydraulic equipment such as the power steering apparatus 43 equipped on the electric tractor. If no work apparatus is equipped, the hydraulic fluid of the hydraulic pump driven by the electric motor 12 is supplied to hydraulic equipment such as the power steering apparatus 43 equipped on the electric tractor.

### (Fourth Alternative Embodiment of Invention)

The electric motor 12 may be configured to transmit motive power to the PTO shaft 28 and the mid-PTO shaft 29, but not to drive the hydraulic pump.

According to this configuration, the hydraulic pump may be configured to be driven by an electric motor (not shown) other than the electric motors 11 and 12.

The hydraulic pump may be configured to be driven by the electric motor 11. In this case, the control valve unit 71 is preferably attached to the left front-rear frames 73 and 74.

### (Fifth Alternative Embodiment of Invention)

When the electric motors 11 and 12 are provided side by side along the left-right direction, the electric motor 11 may be provided on the right and the electric motor 12 may be provided on the left.

### (Sixth Alternative Embodiment of Invention)

One electric motor 11 may be housed in the housing frame 5.

In this configuration, the width W1 in the left-right direction of the housing frame 5 and the width W3 in the left-right direction of the front portion 6a of the transmission case 6 may be approximately the same. In this case, the electric motor 12 may be attached to a part other than the housing frame 5.

### (Seventh Alternative Embodiment of Invention)

Two electric motors 11 may be housed in the housing frame 5 side by side along the left-right direction.

According to this configuration, one electric motor 11 is a first electric motor 11, and the other electric motor 11 is a second electric motor 11. In this case, the electric motor 12 may be attached to a part other than the housing frame 5.

### (Eighth Alternative Embodiment of Invention)

One electric motor 12 may be housed in the housing frame 5.

According to this configuration, the width W1 in the left-right direction of the housing frame 5 and the width W3 in the left-right direction of the front portion 6a of the transmission case 6 may be approximately the same. In this case, the electric motor 11 may be attached to a part other than the housing frame 5.

### (Ninth Alternative Embodiment of Invention)

Two electric motors 12 may be housed in the housing frame 5 side by side along the left-right direction.

According to this configuration, one electric motor 12 is a first electric motor 12, and the other electric motor 12 is a second electric motor 12. In this case, the electric motor 11 may be attached to a part other than the housing frame 5.

### (Tenth Alternative Embodiment of the Invention)

The front portions of the electric motors 11 and 12 may be coupled to the front portion 14 of the housing frame 5.

According to this configuration, the casings of the electric motors 11 and 12 are part of the housing frame 5, thus improving the rigidity of the housing frame 5.

### (Eleventh Alternative Embodiment of the Invention)

If the front loader apparatus 65 and the backhoe apparatus 75 are not equipped, the front-rear frames 73 and 74 may be coupled between the attachment portion 23 of the housing frame 5 and the rear axle case 6c of the transmission case 6.

If the front loader apparatus 65 is not equipped and the front-rear frames 74 are coupled between the attachment portion 23 of the housing frame 5 and the rear axle case 6c of the transmission case 6, the backhoe apparatus 75 may be attached to the rear attachment portions 74a of the front-rear frames 74.

### (Twelfth Alternative Embodiment of Invention)

The electric tractor may be configured as a rear-two-wheel-drive type instead of a four-wheel-drive type.

With this configuration, the pipe member 30, the front-wheel transmission shaft 31, the bearing portion 32, the opening 15b in the rear portion 15 of the housing frame 5, the recess 14a in the front portion 14, and the like are eliminated.

### (Thirteenth Alternative Embodiment of the Invention)

Instead of the rear wheels 2, crawler-type right and left travel apparatuses (not shown) may be attached to the transmission case 6.

The electric tractor may be configured as a hybrid-type electric tractor including an engine (not shown) and the electric motors 11 and 12 as power sources, instead of as an electric tractor including only the electric motors 11 and 12 as power sources.

### (Correspondence with Claims) - 1

With the above configuration, the driving section 8 having the floor 38 at a lower portion thereof is included. The battery 10 is included, which is provided frontward of the driving section 8. The front axle case 7 is included, to which the right and left front wheels 1 are attached, and which is provided below the battery 10.

The electric motors 11 and 12 are included, which are provided rearward of the rear end portion of the battery 10 and below the floor 38, and are supplied with power of the battery 10. The transmission case 6 is included, which is provided rearward of the electric motors 11 and 12, and to which the rear travel apparatus (rear wheels 2) is attached, the transmission case 6 including in its interior a transmission mechanism to which motive power of the electric motors 11 and 12 is transmitted.

The electric motor 11 generates motive power for traveling. The electric motor 12 generates power and hydraulic pressure for operating the equipped work apparatuses (the front loader apparatus 65 and the backhoe apparatus 75).

The electric tractor includes the first electric motor 11 that generates motive power for traveling, and the second electric motor 12 that generates motive power and hydraulic pressure for operating the equipped work apparatuses (the front loader apparatus 65 and the backhoe apparatus 75).

### (Correspondence with Claims) - 2

With the above configuration, the first electric motor 11 and the second electric motor 12 are provided side by side along the left-right direction.

The electric tractor includes the housing frame 5 housing the electric motors 11 and 12, and the front frame 4 to which the front axle case 7 is attached.

The front frame 4 is coupled to the front portion 14 of the housing frame 5, and the transmission case 6 is coupled to the rear portion 15 of the housing frame 5.

The front axle case 7 is attached to the lower portion of the front frame 4, and the battery 10 is attached to the upper portion of the front frame 4.

The electric tractor includes the first electric motor 11 and the second electric motor 12, and the first electric motor 11 and the second electric motor 12 are housed side by side in the left-right direction in the housing frame 5. The width W1 in the left-right direction of the housing frame 5 is greater than the width W2 in the left-right direction of the front frame 4, and greater than the widths W3, W4, and W5 in the left-right direction of the transmission case 6.

The widths W3 and W4 in the left-right direction of the front portion 6a of the transmission case 6 are smaller than the width W1 in the left-right direction of the housing frame 5, and greater than the width W5 in the left-right direction of the rear portion 6b of the transmission case 6.

### Industrial Applicability

The present invention can be applied to an electric tractor.

### Description of Reference Signs

- 1: Front wheel
- 2: Rear wheel (rear travel apparatus)
- 4: Front frame
- 5: Housing frame
- 6: Transmission case
- 6a: Front portion of transmission case
- 6b: Rear portion of transmission case
- 7: Front axle case
- 8: Driving section
- 10: Battery
- 11: Electric motor (first electric motor)
- 12: Electric motor (second electric motor)
- 14: Front portion of housing frame
- 15: Rear portion of housing frame
- 38: Floor
- 65: Front loader apparatus (work apparatus)
- 75: Backhoe apparatus (work apparatus)
- W1: Width in left-right direction of housing frame
- W2: Width in left-right direction of front frame
- W3: Width in left-right direction of transmission case (width in left-right direction of front portion of transmission case)
- W4: Width in left-right direction of transmission case (width in left-right direction of front portion of transmission case)
- W5: Width in left-right direction of transmission case (width in left-right direction of rear portion of transmission case)

## Claims

1. An electric tractor comprising:
a driving section having a floor at a lower portion thereof;
a battery provided frontward of the driving section;
a front axle case to which right and left front wheels are attached, and which is provided below the battery;
at least one electric motor that is provided rearward of a rear end portion of the battery and below the floor, and is supplied with power of the battery; and
a transmission case that is provided rearward of the at least one electric motor, and to which a rear travel apparatus is attached, the transmission case including in its interior a transmission mechanism to which the motive power of the at least one electric motor is transmitted.

2. The electric tractor according to claim 1,
wherein the at least one electric motor generates motive power for traveling.

3. The electric tractor according to claim 1,
wherein the at least one electric motor generates motive power and hydraulic pressure for operating an equipped work apparatus.

4. The electric tractor according to claim 1,
wherein the at least one electric motor includes a first electric motor that generates motive power for traveling, and a second electric motor that generates motive power and hydraulic pressure for operating an equipped work apparatus.

5. The electric tractor according to claim 4,
wherein the first electric motor and the second electric motor are provided side by side along a left-right direction.

6. The electric tractor according to any one of claims 1 to 5, further comprising:
a housing frame housing the at least one electric motor; and a front frame to which the front axle case is attached,
wherein the front frame is coupled to a front portion of the housing frame, and the transmission case is coupled to a rear portion of the housing frame.

7. The electric tractor according to claim 6,
wherein the front axle case is attached to a lower portion of the front frame, and
the battery is attached to an upper portion of the front frame.

8. The electric tractor according to claim 6 or 7,
wherein the at least one electric motor includes a first electric motor and a second electric motor,
the first electric motor and the second electric motor are housed side by side along the left-right direction in the housing frame, and
a width in the left-right direction of the housing frame is greater than a width in the left-right direction of the front frame, and greater than a width in the left-right direction of the transmission case.

9. The electric tractor according to any one of claims 6 to 8,
wherein a width in the left-right direction of the front portion of the transmission case is smaller than a width in the left-right direction of the housing frame, and greater than a width in the left-right direction of the rear portion of the transmission case.
